# EUROPÄISCHE PATENTSCHRIFT

(11) **EP 0 602 366 B1**
(45) Veröffentlichungstag und Bekanntmachung des Hinweises auf die Patenterteilung: **28.02.1996**
(21) Anmeldenummer: 93117779.4
(22) Anmeldetag: 03.11.1993
(51) Int. Cl.: B23Q 1/72

(54) **Selbstzentrierende Lünette**
Self-centering steady rest
Lunette fixe à auto-centrage

(30) Priorität: 16.11.1992 DE 4238613
(43) Veröffentlichungstag der Anmeldung: 22.06.1994
(73) Patentinhaber: SMW-Autoblok Spannsysteme GmbH, D-88070 Meckenbeuren (DE)
(72) Erfinder: Kiefer, Jürgen, D-88048 Friedrichshafen (DE)
(74) Vertreter: Engelhardt, Guido, Dipl.-Ing.

(56) Entgegenhaltungen:
- DE-C- 3 543 806
- GB-A- 2 089 707
- PATENT ABSTRACTS OF JAPAN vol. 10, no. 365 (M-542) (2422) 6. Dezember 1986 & JP-A-61 159 343 (SMW JAPAN) 19. Juli 1986

## Beschreibung

Die Erfindung bezieht sich auf eine selbstzentrierende Lünette zum Aufspannen und/oder zur Halterung eines Werkstückes auf einer Drehmaschine mit drei in einem Gehäuse gelagerten und in einer gemeinsamen Ebene verstellbaren Haltegliedern, von denen die beiden äußeren Halteglieder als spiegelbildlich zueinander angeordnete auf Gelenkbolzen schwenkbar in dem Gehäuse abgestützte Winkelhebel ausgebildet sind und das mittlere Halteglied durch einen von Druckmittel beaufschlagbaren Betätigungskolben radial in Richtung auf das Werkstück verschiebbar in dem Gehäuse geführt ist und ein mit Steuerflächen versehenes Mittelstück trägt, das mit den freien Enden der Winkelhebel vorzugsweise über Rollen zusammenwirkt, und wobei zur Vergrößerung der Einlegeöffnung der Lünette eines oder beide der äußeren Halteglieder über einen Gelenkhebel mit dem Mittelstück oder dem mittleren Halteglied zwangläufig gekoppelt sind.

Durch die DE-C2-35 43 806 ist eine Lünette dieser Art, die sich in der Praxis außerordnetlich gut bewährt hat, bekannt. Bei dieser Ausgestaltung ist zwar mittels des unmittelbar an dem Mittelstück angelenkten Gelenkhebels eines der beiden äußeren Halteglieder zur Vergrößerung der Einlegeöffnung durch eine zusätzliche Verstellbewegung des mittleren Haltegliedes aufschwenkbar, bedingt durch die Anlenkung des Gelenkhebels an dem Mittelstück ist jedoch dessen Verschwenkbereich begrenzt. Der Gelenkhebel ist nämlich zwischen dem das Halteglied tragenden Gelenkbolzen und der mit der Steuerfläche des Mittelstückes zusammenwirkenden an dem Halteglied angebrachten Rolle an diesem angelenkt. Ferner ist nachteilig, daß an dem zum Ausgleich der unterschiedlichen Verstellwege der Halteglieder mit einem Langloch, in das ein an dem Halteglied angebrachter Bolzen eingreift, versehener Gelenkhebel eine Feder abgestützt ist. Bei einem Bruch der Feder bzw. bei nachlassender Vorspannkraft ist eine Führung des äußeren Haltegliedes somit nicht mehr gegeben.

Aufgabe der Erfindung ist es daher, eine selbstzentrierende Lünette der eingangs genannten Gattung in der Weise auszugestalten, daß zumindest eines der beiden äußeren Halteglieder durch eine zusätzliche Verstellbewegung des mittleren Haltegliedes weit aufgeschwenkt werden kann und daß stets eine sichere Ankoppelung des zusätzlich verschwenkbaren Haltegliedes gewährleistet ist. Das äußere Halteglied soll somit um 90° und mehr gegenüber der Spannstellung verschwenkt werden können, so daß auch bei vertikaler Anordnung der Lünette die zu bearbeitenden Werkstücke horizontal in diese eingelegt werden können. Der dazu erforderliche Bauaufwand soll gering gehalten werden, dennoch soll sichergestellt sein, daß selbst bei hohen Beanspruchungen nahezu keine Beschädigungen in Kauf zu nehmen sind und daß stets eine hohe Betriebssicherheit gegeben ist. Auch soll es ermöglicht werden, ein nicht zusätzlich verstellbares Halteglied in beliebigen Winkelstellungen zu halten.

Gemäß der Erfindung wird dies dadurch erreicht, daß der oder die Gelenkhebel jeweils in Form eines zweischenkeligen Winkelhebels ausgebildet sind, die verdrehbar an dem Gehäuse der Lünette oder an diesen und dem zu verstellenden äußeren Halteglied abgstützt und mittels einer Steuerkurve durch eine zusätzliche Verstellbewegung des mittleren Haltegliedes verschwenkbar sind.

Nach einer vorteilhaften Ausgestaltung können hierbei die Gelenkhebel jeweils im Stoßbereich der beiden Schenkel vorzugsweise mittig zu dem mittleren Halteglied, auf einem in das Gehäuse der Lünette und/oder einem Gehäusedeckel eingesetzten Gelenkbolzen verdrehbar gelagert sein, und die Steuerkurve kann in das Mittelstück oder das mittlere Halteglied eingearbeitet werden, wobei in die Steuerkurve ein an dem Ende des zugeordneten Schenkels des Gelenkhebels angebrachtes, in Form eines Stiftes ausgebildetes Führungsglied, eingreift.

Ferner ist es zweckmäßig, die Steuerkurve aus einem achssenkrecht zur Verstellrichtung des mittleren Haltegliedes verlaufenden Kurventeil und einem in dessen Verstellrichtung sich erstreckenden Kurventeil zusammenzusetzen und den dem äußeren Halteglied zugeordneten Schenkel des Gelenkhebels an einem die mit der Steuerfläche des Mittelstückes zusammenwirkenden Rolle tragenden Bolzen an dem äußeren Halteglied anzulenken, der in ein im Endbereich des Schenkels in diesen eingearbeitetes in Längsrichtung sich erstreckendes Langloch eingreift.

Nach einer andersartigen Ausführung kann der Gelenkhebel aber auch im Stoßbereich der beiden Schenkel mit dem äußeren Halteglied gelenkig verbunden und der eine Schenkel des Gelenkhebels verdrehbar auf einem in das Gehäuse der Lünette und/oder einen Gehäusedeckel eingesetzten Gelenkbolzen gelagert und der andere Schenkel mit der Steuerkurve versehen sein, in die ein an dem mittleren Halteglied oder dem Mittelstück angebrachtes, in Form eines Stiftes ausgebildetes Führungsglied eingreift.

Bei dieser Ausführungsvariante sollte die Steuerkurve im Spannbereich der Lünette aus einem in Verstellrichtung des mittleren Haltegliedes verlaufenden Kurventeil und einem sich an dessen inneres Ende anschließendes in Richtung der Anlenkung des Gelenkhebels an dem äußeren Halteglied verlaufendes Kurventeil zusammengesetzt und der eine Schenkel des Gelenkbolzens sollte seitlich neben dem mittleren Halteglied an dem Gehäuse oder dem Gehäusedeckel mittels des Gelenkbolzens verdrehbar gelagert sein.

Des weiteren ist es zum Ausgleich der unterschiedlichen Verstellwege der Halteglieder angezeigt, den verdrehbar gelagerten Schenkel des Gelenkhebels im Bereich des äußeren Haltegliedes mit einem sich in Längsrichtung erstreckenden Langloch zu versehen, in dem ein von dem äußeren Halteglied abstehender Bolzen im Spannbereich der Lünette verstellbar geführt ist.

Gemäß einer andersartigen Ausgestaltung kann der Gelenkhebel aber auch in den Endbereichen seiner beiden Schenkel einerseits an dem äußeren Halteglied - im Spannbereich der Lünette - vorzugsweise in der Mitte zwischen dem Gelenkbolzen des äußeren Haltegliedes und der dieses einschließenden Wandung des Gehäuses angelenkt und andererseits etwa auf gleicher Höhe an dem Gehäuse drehbar gelagert sein, und der dem mittleren Halteglied zugeordnete Schenkel des Gelenkhebels sollte an die Steuerkurve angekoppelt sein.

Die Steuerkurve ist hierbei als in das mittlere Halteglied oder das Mittelstück eingearbeitete, in dessen Achsrichtung sich erstreckende Führungsnut auszubilden, in die ein von dem Gelenkhebel abstehender Stift als Führungsglied eingreift.

Um die Baubreite der Lünette zu verringern, sollte das mittlere Halteglied auf einer oder beiden Seiten jeweils mit einer Aufnahmetasche versehen sein, in die die an den Steuerflächen anliegenden Enden der äußeren Halteglieder durch die Gelenkhebel zwangläufig einführbar sind.

Zur Führung eines einem in eine vergrößerte Auslegeöffnung verschiebbaren äußeren Haltegliedes gegenüberliegend angeordneten Haltegliedes kann das Mittelstück in Verlängerung der zugeordneten Steuerfläche mit einer Anlagefläche für die mit dieser zusammenwirkende Rolle ausgestattet werden, es ist aber auch möglich, ein solches Halteglied durch einen weiteren als zweischenkligen Winkelhebel ausgebildeten Gelenkhebel mit dem Mittelstück oder dem mittleren Halteglied trieblich zu verbinden, der in dem Stoßbereich der beiden Schenkel verdrehbar gelagert, dessen einer Schenkel mit dem Halteglied gelenkig verbunden und dessen anderer Schenkel mittels einer in das Mittelstück oder das mittlere Halteglied eingearbeiteten Steuerkurve verstellbar ist.

Wird eine selbstzentrierende Lünette gemäß der Erfindung ausgebildet, so ist es nicht nur möglich, eines oder beide der äußeren Halteglieder durch eine zusätzliche Verstellbewegung des mittleren Haltegliedes weit aufzuschwenken, so daß Werkstücke auch achssenkrecht zur Verstellrichtung des mittleren Haltegliedes in die Lünette eingelegt werden können, sondern es ist auch gewährleistet, daß ein aufgeschwenktes Halteglied ohne Schwierigkeiten zwangläufig in die Ausgangslage zurückgeführt wird. Durch die Ausgestaltung des Gelenkhebels als zweischenkeliger Winkelhebel, der an unterschiedlichen Bauteilen verdrehbar gelagert sein kann und durch die zusätzliche relativ kurz bemessene Verstellbewegung des mittleren Haltegliedes verdrehbar ist, ist nämlich sichergestellt, daß das äußere Halteglied um einen Winkel von bis zu 110^{o} gegenüber einer Spannstellung aufgeschwenkt werden kann. Dennoch ist dieses stets mit dem mittleren Halteglied derart gekoppelt, daß dessen Verstellbewegungen in beiden Richtungen zuverlässig auf das äußere Halteglied übertragen werden. Und da durch den Gelenkhebel die Verstellbewegung des mittleren Haltegliedes übersetzt wird, ist, um einen großen Schwenkwinkel zu verwirklichen, nur ein kurzer Hub des mittleren Haltegliedes erforderlich. Der erforderliche Bauaufwand, mit dem dies zu bewerkstelligen ist, ist gering, eine sichere und störungsfreie Betriebsweise ist aber stets gegeben.

Durch die Steuerkurven, durch die die Schwenkbewegungen der Gelenkhebel gesteuert werden, ist ferner sichergestellt, daß die äußeren Halteglieder problemlos den an dem Mittelstück angearbeiteten Steuerflächen zugeführt werden und daß keine Fehlbetätigungen insbesondere bei der Rückführung der äußeren Halteglieder in Kauf zu nehmen sind. Auch kann mittels einer in entsprechender

Weise ausgebildeten Steuerkurve ein nicht in eine vergrößerte Einlegeöffnung verschwenkbares Halteglied in eine beliebig wählbare Lage aufgeschwenkt werden. Bei hoher Betriebssicherheit wird demnach, zumal keine einem hohen Verschleiß unterliegenden Bauelemente erforderlich sind, über einen längeren Zeitraum eine einwandfreie Funktionsfähigkeit ermöglicht.

In der Zeichnung sind einige Ausführungsbeispiele der gemäß der Erfindung ausgebildeten selbstzentrierenden Lünette dargestellt, die nachfolgend im einzelnen erläutert sind. Hierbei zeigen:
- Figur 1: eine mit einem zusätzlich ausschwenkbaren äußeren Halteglied versehene Lünette in Vorderansicht, in Spannstellung,
- Figur 2: die Lünette nach Figur 1 mit geöffnetem äußeren Halteglied,
- Figur 3: die Lünette nach Figur 1 mit zwei verschwenkbaren Haltegliedern,
- Figur 4: die Lünette nach Figur 1 in einer Ausführungsvariante in einer Darstellung nach Figur 2,
- Figur 5: die Lünette nach Figur 1 mit einem andersartig ausgebildeten Gelenkhebel,
- Figur 6: die Lünette nach Figur 5 mit einem geöffneten äußeren Halteglied,
- Figur 7: die Lünette nach Figur 1 mit einer andersartigen Ankoppelung des äußeren Haltegliedes,
- Figur 8: die Lünette nach Figur 7 mit geöffnetem äußeren Halteglied und
- Figur 9: die Lünette nach Figur 1, deren äußere Halteglieder mittels unterschiedlich angelenkter Gelenkhebel und unterschiedlich ausgebildeter Steuerkurven in Betriebsstellungen verstellbar sind.

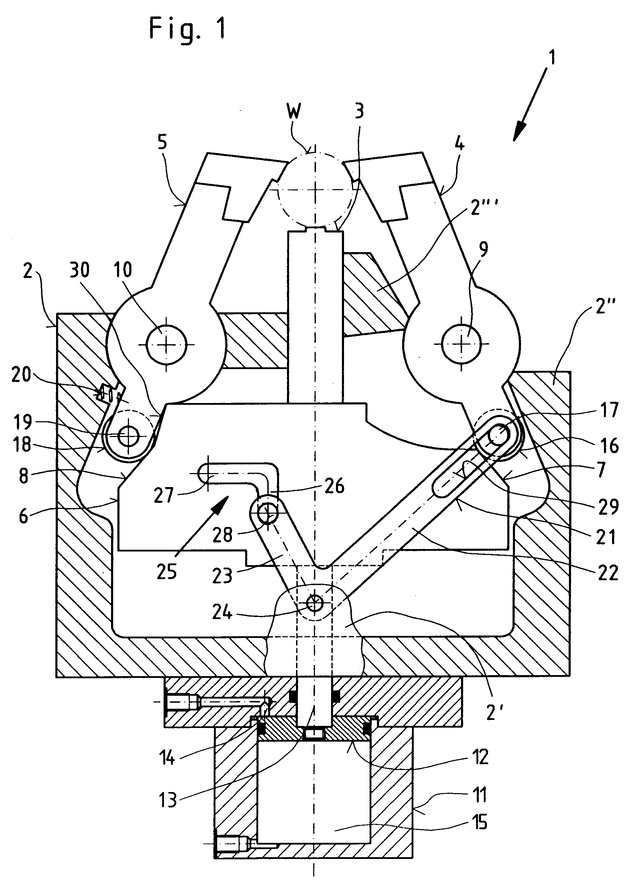

Die in den Figuren 1 bis 9 dargestellte und mit 1 bzw. 1' bzw. 1'' bezeichnete Lünette dient zum Aufspannen und/oder zur Halterung eines Werkstückes W auf einer Drehmaschine und besteht jeweils aus drei in einem Gehäuse 2 gelagerten Haltegliedern 3, 4 und 5, die in einer gemeinsamen Ebene verstellbar sind. Die beiden äußeren Halteglieder 4 und 5 sind hierbei als Winkelhebel ausgebildet und auf Gelenkbolzen 9 bzw. 10 schwenkbar in dem Gehäuse 2 gelagert. Das mittlere Halteglied 3 ist dagegen radial in Richtung des Werkstückes W verstellbar geführt. Dazu ist mit dem mittleren Halteglied 3 ein Betätigungskolben 12 verbunden, der in einem an dem Gehäuse 2 angeflanschten Zylinder 11 eingesetzt und durch wechselweise Druckmittelzuführung zu einem der Druckräume 14 oder 15 verstellbar ist und dessen Kolbenstange 13 mit dem mittleren Halteglied 3 in Triebverbindung steht. Außerdem trägt das mittlere Halteglied 3 ein mit Steuerflächen 7 bzw. 8 versehenes Mittelstück 6, das mit den freien Enden der beiden äußeren Halteglieder 4 und 5, die dazu mit auf Bolzen 17 bzw. 19 drehbar gelagerten Rollen 16 und 18 ausgestattet sind, zusammenwirkt.

Auf das in Ansicht dargestellte Gehäuse 2 wird ein Deckel 2' aufgesetzt, der mittels nicht gezeigter Schrauben an den Wänden 2'' des Gehäuses 2 befestigt ist. Und um zu verhindern, daß z. B. Späne oder andere Verunreinigungen in das Innere des Gehäuses 2 gelangen, sind die Austrittsöffnungen der Halteglieder 3, 4 und 5 durch nicht eingezeichnete Dichtungen verschlossen.

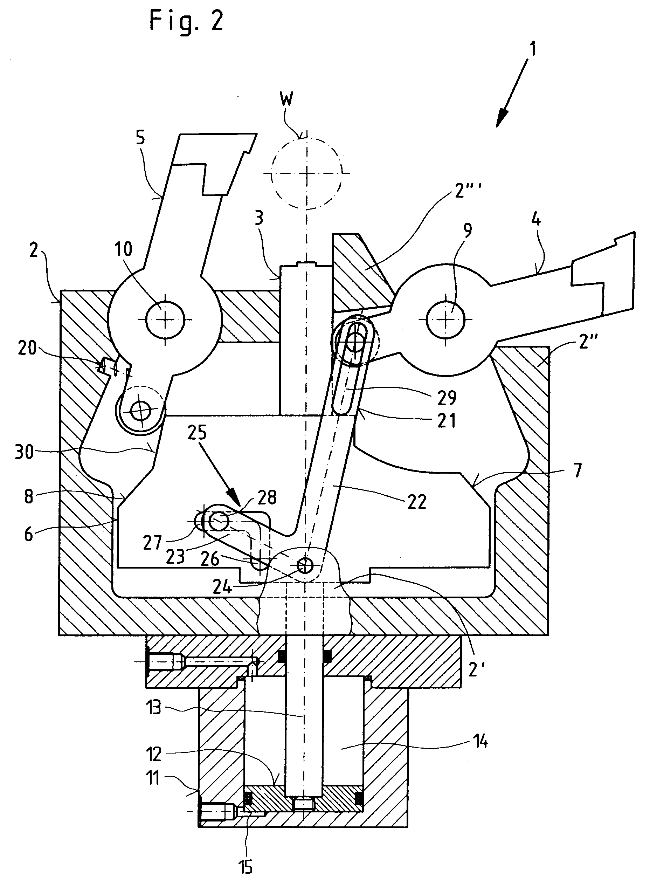

Damit die Einlageöffnung der Lünette 1 vergrößert und das äußere Halteglied 4 durch eine zusätzliche Verstellbewegung des mittleren Haltegliedes 3 um einen Winkel von ca. 110^{o} aufgeschwenkt werden kann, wie dies in Figur 2 dargestellt ist, ist das äußere Halteglied 4 mittels eines Gelenkhebels 21 mit dem an dem mittleren Halteglied 3 angebrachten Mittelstück 6 zwangläufig gelenkig verbunden. Dies ist in der Weise bewerkstelligt, indem der Gelenkhebel 21 als zweischenkeliger Winkelhebel ausgebildet ist, der im Stoßbereich seiner beiden Schenkel 22 und 23 mittels eines Gelenkbolzens 24 an dem Deckel 2' des Gehäuses 2 verdrehbar gelagert ist. Des weiteren sind der Schenkel 22 des Gelenkhebels 21 an dem äußeren Halteglied 4 und der Schenkel 23 an dem Mittelstück 6 angelenkt.

In das Mittelstück 6 ist dazu eine Steuerkurve 25 eingearbeitet, die aus einem parallel zu dem mittleren Halteglied 3 verlaufenden Kurventeil 26 und einem achssenkrecht zu dessen Verstellrichtung sich erstreckenden Kurventeil 27 zusammengesetzt ist. Mittels eines von dem Schenkel 23 abstehenden Führungsgliedes in Form eines Stiftes 28, der in die Steuerkurve 25 eingreift, ist der Gelenkhebel 21 mit dem Mittelstück 2 gekoppelt. In den Schenkel 22 ist dagegen ein Langloch 29 eingearbeitet, in das der die mit der Steuerfläche 7 zusammenwirkende Rolle 16 tragende seitlich verlängerte Bolzen 17 eingreift. Dadurch ist der Gelenkhebel 21 bei Spannvorgängen und somit bei Anlage der Rollen 16 und 18 an den Steuerflächen 17 bzw. 19 eliminiert, da der Bolzen 17 in dem Langloch 29 ausweichen kann.

Wird dagegen das mittlere Halteglied 3 mit Hilfe des Betätigungskolbens 12 in die in Figur 2 dargestellte Endstellung verschoben, so wird der Gelenkhebel 21, sobald der Stift 28 in den Kurventeil 27 gelangt, um den Gelenkbolzen 24 verdreht. Und durch diese Verdrehbewegung des Gelenkhebels 21 wird das Halteglied 4 in die in Figur 2 gezeigte Lage verschwenkt, so daß eine große Einlegeöffnung gegeben ist.

In diesem Betriebszustand der Lünette 1 liegt die Rolle 19 des äußeren Haltegliedes 5 an einer an dem Mittelstück in Verlängerung der Steuerfläche 8 vorgesehenen Anlagefläche 30 an, durch eine auf das Halteglied 5 einwirkende Feder 20 wird dieses in seiner Lage stabilisiert.

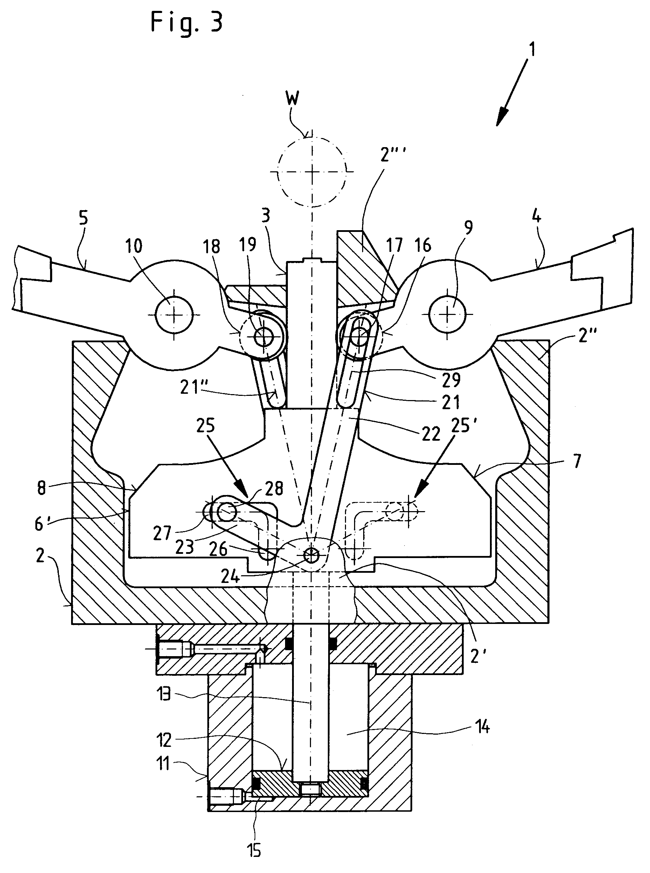

In Figur 3 ist gezeigt, daß beide äußere Halteglieder 4 und 5 durch Gelenkhebel 21 und 21'' weit aufgeschwenkt werden können. Der zur Ankoppelung des Haltegliedes 5 vorgesehene Gelenkhebel 21'' sowie die in das Mittelstück 6' eingearbeitete, diesem zugeordnete Steuerkurve 25' sind hierbei allerdings nur strichpunktiert eingezeichnet.

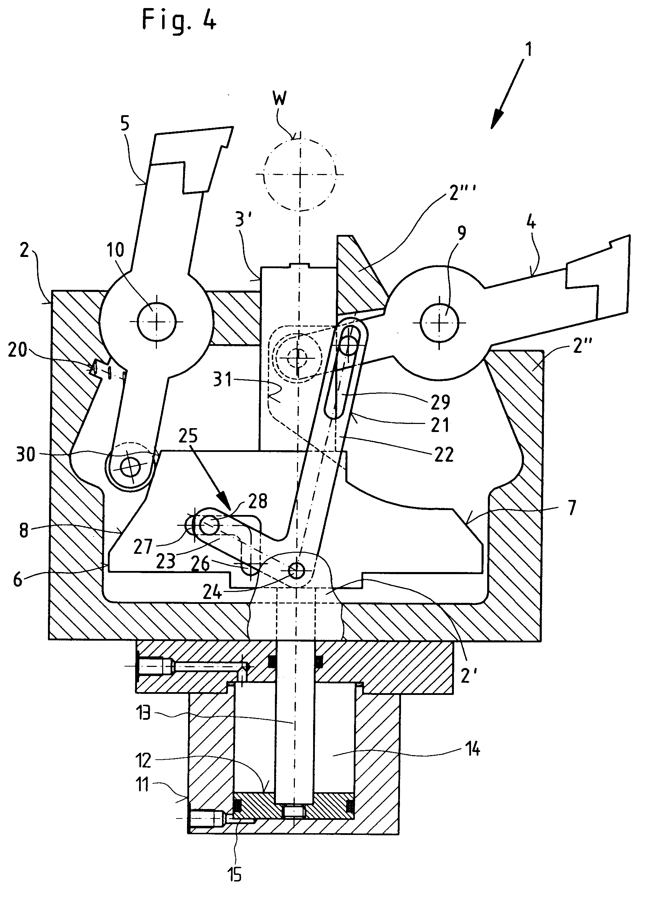

Gemäß Figur 4 ist in das mittlere Halteglied 3' eine in Richtung des Haltegliedes 4 offene Ausnehmung 31 eingearbeitet, in die das dem Mittelstück 6 zugeordnete Ende des Haltegliedes 4 einführbar ist. Dadurch wird die Baubreite der Lünette 1 verringert. Durch einen an dem Gehäuse 2 angeformten, in Richtung des mittleren Haltegliedes 3 bzw. 3' abstehenen Ansatzstückes 2''' wird in Spannstellung der Lünette 1 die Ausnehmung 31 überdeckt.

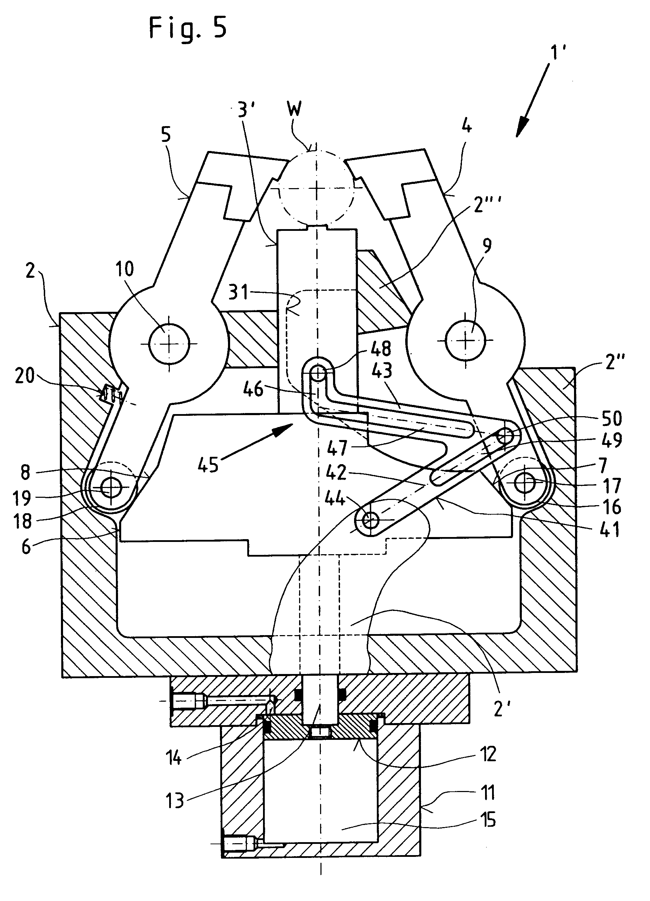

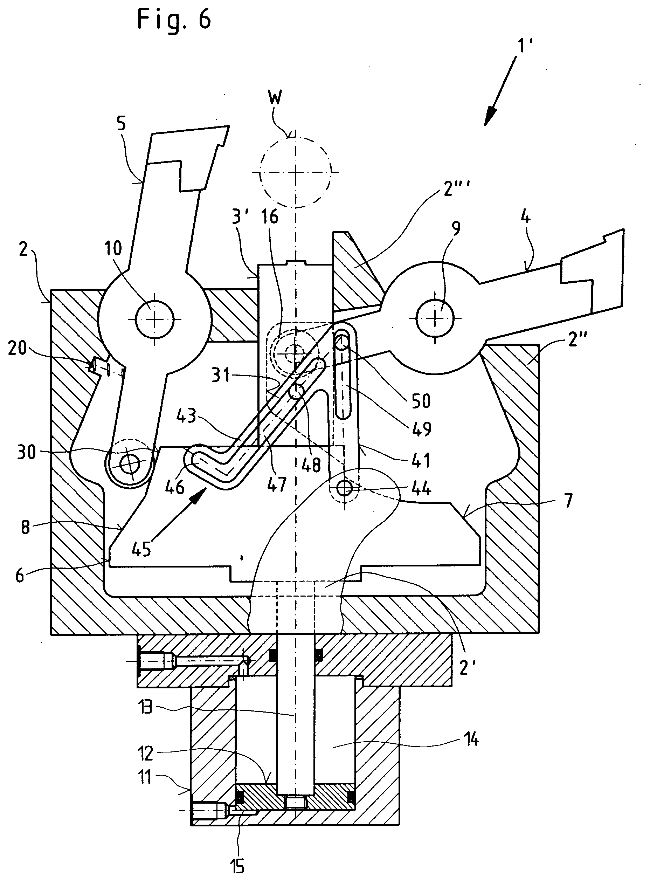

Bei der Ausführungsvariante der Lünette 1' nach den Figuren 5 und 6 ist das äußere Halteglied 4 mittels eines Gelenkhebels 41 mit dem mittleren Halteglied 3' gekoppelt, dessen Schenkel 42 mittels eines in den Deckel 2' des Gehäuses 2 eingesetzten Gelenkbolzens 44 verdrehbar ist.

Im Stoßbereich der beiden Schenkel 42, 43 ist der Gelenkhebel 41 hierbei an dem äußeren Halteglied 4 angelenkt, des weiteren ist in den Schenkel 43 eine zweiteilige Steuerkurve 45 eingearbeitet, in die ein an dem mittleren Halteglied 3' angebrachter Stift 48 als Führungsglied eingreift.

Die Anlenkung des Gelenkhebels 41 an dem äußeren Halteglied 4 wird mittels eines Stiftes 50 bewerkstelligt, der in einem in den Schenkel 42 eingearbeitetes Langloch 49 geführt ist. Des weiteren weist die an dem Schenkel 43 vorgesehene Steuerkurve 45 einen Kurventeil 46 auf, der, solange sich die Halteglieder 3, 4 und 5 im Spannbereich befinden, in Achsrichtung des mittleren Haltegliedes 3 verläuft, so daß durch dieses bei Spannvorgängen die Lage des wiederum als Winkelhebel ausgebildeten Gelenkhebels 41 nicht verändert wird. Sobald jedoch das mittlere Halteglied 3' über die maximale Spannstellung hinaus durch den Betätigungskolben 12 zurückgezogen wird und der Stift 48 in den sich an den Kurventeil 46 anschließenden in Richtung des Stiftes 50 sich erstreckenden Kurventeil 47 gelangt, wird der Gelenkhebel 41 und das an diesem angelenkte Halteglied 4 derart verschwenkt, daß, wie dies in Figur 6 gezeigt ist, sich eine vergrößerte Einlegeöffnung ergibt.

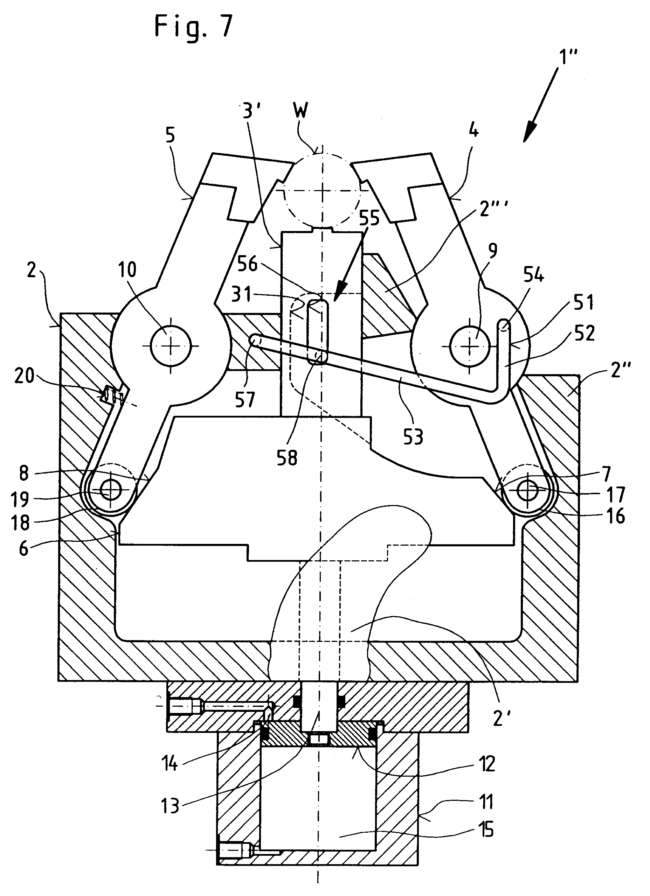

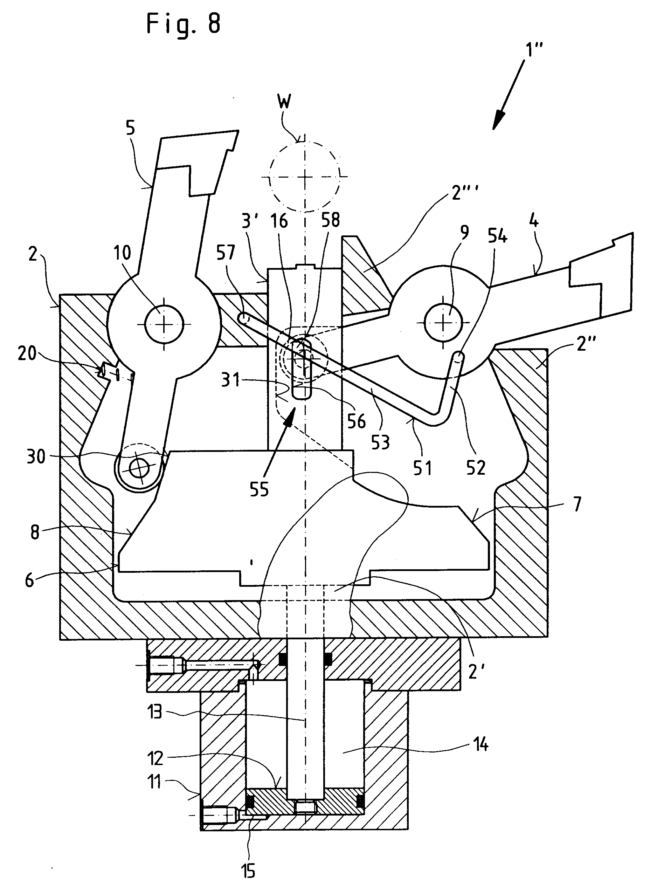

Nach den Figuren 7 und 8 dient bei der Lünette 1'' zum Ausschwenken des äußeren Haltegliedes 4 ein zweischenkliger Gelenkhebel 51, der in den Endbereichen seiner Schenkel 52 und 53 mittels Gelenkbolzen 54 und 57 an dem äußeren Halteglied 4 sowie etwa auf gleicher Höhe an dem Gehäuse 2 angelenkt ist. Des weiteren ist an dem Schenkel 53 des Gelenkhebels 51 ein Stift 58 als Führungsglied angebracht, der in eine in das mittlere Halteglied 3' eingearbeitete, als Längsnut 56 gestaltete Steuerkurve 55 eingreift.

Wird das mittlere Halteglied 3 in die in Figur 8 gezeigte Betriebsstellung verschoben, so wird der Gelenkhebel 51 durch den durch die Steuerkurve 55 geführten Stift 58 derart um den Gelenkbolzen 57 verdreht, daß das äußere Halteglied 4 aufgeschwenkt wird und die Lünette 1'' demnach eine vergrößerte Einlegeöffnung aufweist.

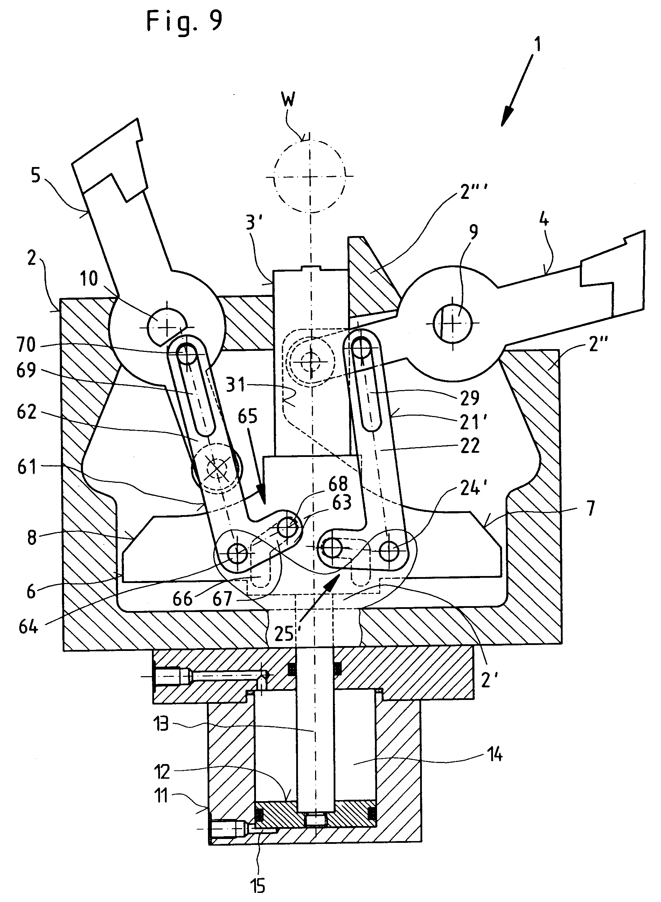

In Figur 9 ist gezeigt, daß das äußere Halteglied 4 der Lünette 1 mittels eines zweischenkligen Gelenkhebels 21', der mit Hilfe einer Steuerkurve 25' um einen Gelenkbolzen 24' verdrehbar ist, aufgeschwenkt werden kann und daß das gegenüberliegende Halteglied 5 mittels eines weiteren gleichgestalteten aber unterschiedlich angelenkten Gelenkhebels 61 während der zusätzlichen Verstellbewegung des mittleren Haltegliedes 3' in eine wählbare Winkelstellung überzuführen ist. Der Gelenkhebel 61 ist hierbei im Stoßbereich der beiden Schenkel 62 und 63 mittels eines Gelenkbolzens 64 an dem Deckel 2' des Gehäuses 2 verdrehbar gelagert und in das Mittelstück 6 ist eine abgewinkelte zweiteilige Steuerkurve 65 eingearbeitet, durch die der Gelenkhebel 61 und das an dessen Schenkel 62 angelenkte Halteglied 5 in entsprechender Weise verschwenkbar sind. Die Steuerkurve 65 weist wiederum einen parallel zu dem mittleren Halteglied 3' verlaufenden Kurventeil 66 sowie einen dazu geneigt verlaufenden Kurventeil 67 auf, durch die ein an dem Schenkel 63 des Winkelhebels 61 angebrachter Stift 68 als Führungsglied eingreift. In den Schenkel 62 ist dagegen ein Langloch 69 eingearbeitet, in dem ein an dem Halteglied 5 angebrachter Stift 70 geführt ist. Entsprechend der Neigung des Kurventeils 67 der Steuerkurve 65 wird somit durch Zurückstellen des mittleren Haltegliedes 3 und des mit diesem fest verbundenen Mittelstückes 6 das Halteglied 5 mehr oder weniger aufgeschwenkt.

## Patentansprüche

1. Selbstzentrierende Lünette (1) zum Aufspannen und/oder zur Halterung eines Werkstückes (W) auf einer Drehmaschine mit drei in einem Gehäuse (2) gelagerten und in einer gemeinsamen Ebene verstellbaren Haltegliedern 3, 4, 5), von denen die beiden äußeren Halteglieder (4, 5) als spiegelbildlich zueinander angeordnete auf Gelenkbolzen (9, 10) schwenkbar in dem Gehäuse (2) abgestützte Winkelhebel ausgebildet sind und das mittlere Halteglied (3) durch einen von Druckmittel beaufschlagbaren Betätigungskolben (12) radial in Richtung auf das Werkstück (W) verschiebbar in dem Gehäuse (2) geführt ist und ein mit Steuerflächen (7, 8) versehenes Mittelstück (6) trägt, das mit den freien Enden der Winkelhebel vorzugsweise über Rollen (17, 18) zusammenwirkt und wobei zur Vergrößerung der Einlegeöffnung der Lünette (1) eines oder beide der äußeren Halteglieder (4, 5) über einen Gelenkhebel (21; 41; 51) mit dem Mittelstück (6) oder dem mittleren Halteglied (3) zwangläufig gekoppelt sind,
**dadurch gekennzeichnet,**
daß der oder die Gelenkhebel (21; 41; 51) jeweils in Form eines zweischenkeligen Winkelhebels ausgebildet sind, die verdrehbar an dem Gehäuse (2) der Lünette (1) und dem zu verstellenden äußeren Halteglied (4) abgstützt und mittels einer Steuerkurve (25; 45; 55) durch eine zusätzliche Verstellbewegung des mittleren Haltegliedes (3) verschwenkbar sind.

2. Lünette nach Anspruch 1,
**dadurch gekennzeichnet,**
daß die Gelenkhebel (21) jeweils im Stoßbereich der beiden Schenkel (22, 23), vorzugsweise mittig zu dem mittleren Halteglied (3), auf einem in das Gehäuse (2) der Lünette (1) und/oder einem Gehäusedeckel (2') eingesetzten Gelenkbolzen (24) verdrehbar gelagert sind.

3. Lünette nach Anspruch 1 oder 2,
**dadurch gekennzeichnet,**
daß die Steuerkurve (25) in das Mittelstück (6) oder das mittlere Halteglied (3) eingearbeitet ist und daß in die Steuerkurve (25) ein an dem Ende des zugeordneten Schenkels (23) des Gelenkhebels (21) angebrachtes, in Form eines Stiftes (28) ausgebildetes Führungsglied, eingreift.

4. Lünette nach Anspruch 3,
**dadurch gekennzeichnet,**
daß die Steuerkurve (25) aus einem achssenkrecht zur Verstellrichtung des mittleren Haltegliedes (3) verlaufenden Kurventeil (26) und einem in dessen Verstellrichtung sich erstreckenden Kurventeil (27) zusammengesetzt ist.

5. Lünette nach einem oder mehreren der Ansprüche 1 bis 4,
**dadurch gekennzeichnet,**
daß der dem äußeren Halteglied (3) zugeordnete Schenkel (22) des Gelenkhebels (21) an einem die mit der Steuerfläche (7) des Mittelstückes (6) zusammenwirkenden Rolle (16) tragenden Bolzen (17) an dem äußeren Halteglied (3) angelenkt ist, der in ein im Endbereich des Schenkels (22) in diesen eingearbeitetes in Längsrichtung sich erstreckendes Langloch (29) eingreift.

6. Lünette nach Anspruch 1,
**dadurch gekennzeichnet,**
daß der Gelenkhebel (41) im Stoßbereich der beiden Schenkel (42, 43) mit dem äußeren Halteglied (4) gelenkig verbunden ist und daß der eine Schenkel (42) des Gelenkhebels (41) verdrehbar auf einem in das Gehäuse (2) der Lünette (1') und/oder einen Gehäusedeckel (2') eingesetzten Gelenkbolzen (44) gelagert und der andere Schenkel (43) mit der Steuerkurve (45) versehen ist, in die ein an dem mittleren Halteglied (3) oder dem Mittelstück (6) angebrachtes, in Form eines Stiftes (48) ausgebildetes Führungsglied eingreift.

7. Lünette nach Anspruch 6,
**dadurch gekennzeichnet,**
daß die Steuerkurve (45) im Spannbereich der Lünette (1) aus einem in Verstellrichtung des mittleren Haltegliedes (3) verlaufenden Kurventeil (46) und einem sich an dessen inneres Ende anschließendes in Richtung der Anlenkung (Bolzen 50) des Gelenkhebels (41) an dem äußeren Halteglied (3) verlaufendes Kurventeil (47) zusammengesetzt ist.

8. Lünette nach Anspruch 6 oder 7,
**dadurch gekennzeichnet,**
daß der eine Schenkel (42) des Gelenkhebels (41) seitlich neben dem mittleren Halteglied (3) an dem Gehäuse (2) oder dem Gehäusedeckel (2') mittels des Gelenkbolzens (44) verdrehbar gelagert ist.

9. Lünette nach einem oder mehreren der Ansprüche 6 bis 8,
**dadurch gekennzeichnet,**
daß der verdrehbar gelagerte Schenkel (42) des Gelenkhebels (41) ein im Bereich des äußeren Haltegliedes (4) sich in Längsrichtung erstreckendes Langloch (49) aufweist, in dem ein von dem äußeren Halteglied (3) abstehender Bolzen (50) im Spannbereich der Lünettte (1') verstellbar geführt ist.

10. Lünette nach Anspruch 1,
**dadurch gekennzeichnet,**
daß der Gelenkhebel (51) in den Endbereichen seiner beiden Schenkel (52, 53) einerseits an dem äußeren Halteglied (4) - im Spannbereich der Lünette (1'') - vorzugsweise in der Mitte zwischen dem Gelenkbolzen (9) des äußeren Haltegliedes (4) und der dieses einschließenden Wandung (2, 2') des Gehäuses (2) angelenkt und andererseits etwa auf gleicher Höhe an dem Gehäuse (2) drehbar gelagert ist, und daß der dem mittleren Halteglied (3) zugeordnete Schenkel (53) des Gelenkhebels (51) an die Steuerkurve (55) angekoppelt ist.

11. Lünette nach Anspruch 10,
**dadurch gekennzeichnet,**
daß die Steuerkurve (55) als in das mittlere Halteglied (3) oder das Mittelstück (6) eingearbeitete, in dessen Achsrichtung sich erstreckende Führungsnut (56) ausgebildet ist, in die ein von dem Gelenkhebel (51) abstehender Stift (58) als Führungsglied eingreift.

12. Lünette nach einem oder mehreren der Ansprüche 1 bis 11,
**dadurch gekennzeichnet,**
daß das mittlere Halteglied (3') auf einer oder beiden Seiten jeweils mit einer Aufnahmetasche (31) versehen ist, in die die an den Steuerflächen (7, 8) anliegenden Enden der äußeren Halteglieder (4, 5) durch die Gelenkhebel (21, 21'') zwangläufig einführbar sind.

13. Lünette nach einem oder mehreren der Ansprüche 1 bis 12,
**dadurch gekennzeichnet,**
daß zur Führung eines einem in eine vergrößerte Auslegeöffnung verschiebbaren äußeren Haltegliedes (4) gegenüberliegend angeordneten Haltegliedes (5) das Mittelstück (6) in Verlängerung der zugeordneten Steuerfläche (8) mit einer Anlagefläche (30) für die mit dieser zusammenwirkende Rolle (18) versehen ist.

14. Lünette nach einem oder mehreren der Ansprüche 1 bis 12,
**dadurch gekennzeichnet,**
daß das einem in eine vergrößerte Einlegeöffnung verschwenkbarem Halteglied (4) gegenüberliegende Halteglied (5) durch einen weiteren als zweischenkligen Winkelhebel ausgebildeten Gelenkhebel (61) mit dem Mittelstück (6) oder dem mittleren Halteglied (3) trieblich verbunden ist, der in dem Stoßbereich der beiden Schenkel (62, 63) verdrehbar gelagert, dessen einer Schenkel (62) mit dem Halteglied (5) gelenkig verbunden und dessen anderer Schenkel (63) mittels einer in das Mittelstück (6) oder das mittlere Halteglied (3) eingearbeiteten Steuerkurve (65) verstellbar ist.

## Claims

1. A self-centering steady rest (1) for clamping and/or holding a workpiece (W) on a turning machine with three holding elements (3, 4, 5) mounted in a housing and adjustable in a common plane, of which the two outermost holding elements (4, 5) are formed as angled levers positioned in a mirror-image arrangement, can be swivelled on articulated pins (9, 10) and are mounted within the housing (2), with the middle holding element (3) being radially guided by an actuation piston (12) which can be actuated by a pressurised medium, capable of being moved towards the workpiece (W) and mounted in the housing (2) as well as carrying a central piece (6) which interacts with the free ends of the angled levers preferably by means of rollers (17, 18), and in which in order to increase the inward opening of the steady rest (1), one or both of the outermost holding elements (4, 5) is held in a force-locking connection with the central piece (6) or the central holding element (3) by means of an twin arm lever (21; 41; 51),
**characterized in that,**
the twin arm lever(s) (21; 41; 51) are each in the shape of a two-armed bell crank and are supported so as to be able to pivot on the housing (2) of the steady rest (1) and on the outermost holding element (4) which is to be moved, and can be swiveled by means of a curved control slot (25; 45; 55) due to an additional adjustment movement of the central holding element (3).

2. The steady rest in accordance with Claim 1,
**characterized in that,**
the twin arm levers (21) are each mounted at the conjunction of the two arms (22, 23) on an articulated pin (24) inserted in the housing (2) of the steady rest (1) and/or in a housing cover (2') so as to swivel, and are preferably positioned centrally in relation to the central holding element (3).

3. The steady rest in accordance with Claim 1 or Claim 2,
**characterized in that,**
the curved control slot (25) is worked into the central piece (6) or into the central holding element (3), and that a guide element in the form of a pin (28) engages in the curved control slot (25), this pin (28) being attached to the end of the corresponding arm (23) of the twin arm lever (21).

4. The steady rest in accordance with Claim 3,
**characterized in that,**
the curved control slot (25) is composed of a curved part (26) running perpendicular to the adjustment direction of the central holding element (3) and also of a curved part (27) which extends in the adjustment direction of the central holding element (3).

5. The steady rest in accordance with one or more of Claims 1 to 4,
**characterized in that,**
the arm (22) of the twin arm lever (21) which is connected to the outermost holding element (4) is articulated on a pin (17) carrying a roll (16) which interacts with the control surface (7) of the central piece (6), with the aforementioned pin (17) forming an articulated connection between the arm (22) and the outermost holding element (4) due to its insertion in a slot (29) worked into the extremity of the arm (22) and running in a longitudinal direction.

6. The steady rest in accordance with Claim 1,
**characterized in that,**
the twin arm lever (41) is in an articulated connection with the outer holding element (4) at the conjunction of the two arms (42, 43), and that one arm (42) of the twin arm lever (41) is hinged on an articulated pin (44) inserted in the housing (2) of the steady rest (1') and/or in a housing cover (2') and the other arm (43) has the curved control slot (45) in which a guide element in the form of a pin (48) engages which is attached to the central holding element (3) or to the central piece (6).

7. The steady rest in accordance with Claim 6,
**characterized in that,**
the curved control slot (45) in the clamping range of the steady rest (1) is composed of a curved part (46) running in the adjustment direction of the central holding element (3) and of a curved part (47) joined onto the inside part of the curved section (46), which runs in the direction of the pivot (pin 50) of the twin arm lever (41) on the outer holding element (4).

8. The steady rest in accordance with Claim 6 or Claim 7,
**characterized in that,**
one arm (42) of the twin arm lever (41) is hinged on the side next to the central holding element (3) on the housing (2) or the housing cover (2') by means of the articulated pin (44).

9. The steady rest in accordance with one or more of Claims 6 to 8,
**characterized in that,**
the arm (42) of the twin arm lever (41) which is mounted so it can rotate has a slot (49) in the region of the outer holding element (4) and running in a longitudinal direction, and a pin (50) projecting from the outer holding element (4) is guided in this slot (49) within the clamping range of the steady rest (1').

10. The steady rest in accordance with Claim 1,
**characterized in that,**
the twin arm lever (51) is hinged at the extremities of both its arms (52, 53), one end being hinged on the outermost holding element (4) - within the clamping range of the steady rest (1'') - with the hinged point preferably being located in the center between the articulated pin (9) of the outermost holding element (4) and the wall (2, 2') of the housing (2) which encloses it, and the other end being hinged at approximately the same height on the housing (2), and that the arm (53) of the twin arm lever (51) which is on the side of the central holding element (3) is connected to the curved control slot (55).

11. The steady rest in accordance with Claim 10,
**characterized in that,**
the curved control slot (55) is formed as a guide slot (56) worked into the central holding element (3) or the central piece (6) and extending in the axial direction, and a pin (58) protruding from the twin arm lever (51) engages in the curved control slot (55) as a guide element.

12. The steady rest in accordance with one or more of Claims 1 to 11,
**characterized in that,**
the central holding element (3') has an accomodating pocket (31) on one or both sides, into which the ends of the outermost holding elements (4, 5) which contact the control surfaces (7, 8) can be made to enter due to the movement of the twin arm levers (21, 21'').

13. The steady rest in accordance with one or more of Claims 1 to 12,
**characterized in that,**
in order to guide a holding element (5) opposite to an outermost holding element (4) which can be moved into an enlarged outward opening, the central piece (6) has an extension to the corresponding control surface (8) in the form of a contact surface (30) for the roller (18) which runs along the contact surface (30).

14. The steady rest in accordance with one or more of Claims 1 to 12,
**characterized in that,**
the holding element (5) opposite to a holding element (4) which can be swiveled into an enlarged inward opening is held in a driving connection with the central piece (6) or the central holding element (3) by means of a further twin arm lever (61) in the form of a two-armed bell crank which is pivoted at the conjunction of the two arms (62, 63) and has one arm (62) hinged on the holding element (5) whilst the other arm (63) can be moved by a curved control slot (65) worked into the central piece (6) or into the central holding element (3).

## Revendications

1. Lunette fixe à auto-centrage (1) pour le serrage et/ou le support d'une pièce à usiner (W) dans un tour, avec trois éléments de retenue (3, 4, 5) logés dans un carter (2) et réglables dans un plan commun, dont les deux éléments extérieurs (4, 5) sont conçus sous forme de leviers angulaires disposés symétriquement l'un par rapport à l'autre et appuyés sur des axes d'articulation (9, 10) de sorte qu'ils pivotent dans le carter (2), et dont l'élément central (3), sous l'influence d'un piston soumis à l'action d'un milieu hydraulique (12), se déplace dans le carter (2) radialement en direction de la pièce à usiner (W) et comporte une pièce centrale (6) munie de faces de commande (7, 8) qui collabore, de préférence par l'intermédiaire de galets (17, 18), avec les extrémités libres des leviers angulaires, l'ouverture d'entrée de la lunette (1) étant agrandie par le fait qu'un ou les deux des éléments extérieurs (4, 5) sont liés par l'intermédiaire d'un levier articulé (21; 41; 51) à la pièce centrale (6) ou avec l'élément de retenue central (3),
caractérisée en ce que
le ou les leviers articulés (21; 41; 51) sont conçus respectivement sous forme d'un levier angulaire à deux bras, s'appuyant en rotation sur le carter (2) de la lunette (1) et sur l'élément de retenue extérieur (4) à ajuster, et que, grâce à une courbe de commande (25; 45; 55), ils se laissent pivoter moyennant un mouvement de réglage supplémentaire de l'élément de retenue central (3).

2. Lunette d'après la revendication 1,
caractérisée en ce que,
au point de jonction des deux bras (22, 23), de préférence centré par rapport à l'élément de retenue central (3), les leviers articulés (21) respectifs sont logés en rotation sur un axe d'articulation (24) prévu dans le carter (2) de la lunette (1) et/ou sur un couvercle (2') du carter.

3. Lunette d'après les revendications 1 ou 2,
caractérisée en ce que
la courbe de commande (25) est pratiquée dans la pièce centrale (6) ou dans l'élément de retenue central (3) et qu'un membre de guidage sous forme d'un goujon (28) prévu sur une extrémité du bras correspondant (23) du levier articulé (21) s'engrène dans la courbe de commande (25).

4. Lunette d'après la revendication 3,
caractérisée en ce que
la courbe de commande (25) se compose d'une partie (26) perpendiculaire au sens de réglage de l'élément de retenue central (3), et d'une partie (27) s'étendant en direction de son sens de réglage.

5. Lunette d'après une ou plusieurs des revendications 1 à 4,
caractérisée en ce que
le bras (22) du levier articulé (21), assigné à l'élément de retenue extérieur (4), est articulé sur l'élément de retenue extérieur (4), par l'intermédiaire d'un axe (17) supportant le galet (16) collaborant avec la face de commande (7) de la pièce centrale (6) et s'engrenant dans un trou oblong (29) pratiqué à proximité d'une extrémité du bras (22) et s'étendant en direction longitudinale.

6. Lunette d'après la revendication 1,
caractérisée en ce que,
au point de jonction des deux bras (42, 43), le levier articulé (41) est articulé sur l'élément de retenue extérieur (4) et qu'un bras (42) du levier articulé (41) est logé en rotation sur un axe d'articulation (44) prévu dans le carter (2) de la lunette (1') et/ou dans le couvercle (2') du carter, et que l'autre bras (43) est muni de la courbe de commande (45) dans laquelle s'engrène un membre de guidage sous forme d'un goujon (48) prévu sur l'élément de retenue central (3) ou sur la partie centrale (6).

7. Lunette d'après la revendication 6,
caractérisée en ce que,
au niveau du serrage de la lunette (1), la courbe de commande (45) se compose d'une partie (46) s'étendant dans le sens de réglage de l'élément de retenue central (3) et d'une partie (47) commençant à son extrémité intérieur et s'étendant en direction de l'articulation (axe 50) du levier articulé (41) sur l'élément de retenue extérieur (4).

8. Lunette d'après les revendications 6 ou 7,
caractérisée en ce que,
à côté de l'élément de retenue central (3) et au moyen de l'axe d'articulation (44), l'un des bras (42) du levier articulé (41) est logé en rotation sur le carter (2) ou sur le couvercle (2') du carter.

9. Lunette d'après une ou plusieurs des revendications 6 à 8,
caractérisée en ce que,
le bras (42) du levier articulé (41), logé en rotation, comporte un trou oblong (49) prévu à proximité de l'élément de retenue extérieur (4) et s'étendant en direction longitudinale, dans lequel est mené à l'endroit du serrage de la lunette (1') et de manière réglable, un axe (50) saillant de l'élément de retenue extérieur (4).

10. Lunette d'après la revendication 1,
caractérisée en ce que,
à l'extrémité de ses deux bras (52, 53), le levier articulé (51) est articulé d'une part sur l'élément de retenue extérieur (4), à l'endroit du serrage de la lunette 1'', ceci de préférence au milieu entre l'axe d'articulation (9) de l'élément de retenue extérieur (4) et la paroi (2', 2'') du carter (2) qui l'entoure, et que d'autre part, il est logé en rotation à peu près au même niveau sur le carter (2), et que le bras (53) du levier articulé (51), assigné à l'élément de retenue central (3) est couplé à la courbe de commande (55).

11. Lunette d'après la revendication 10,
caractérisée en ce que
la courbe de commande (55) est conçue sous forme d'une gorge de guidage (56) pratiquée dans l'élément de retenue central (3) ou dans la pièce centrale (6) et s'étendant en direction de son axe, dans laquelle s'engrène un goujon (58) servant de membre de guidage et saillant du levier articulé (51).

12. Lunette d'après une ou plusieurs des revendications 1 à 11,
caractérisée en ce que
l'élément de retenue central (3') comporte respectivement, soit sur un côté soit sur les deux, une poche de logement (31) dans lesquelles s'introduisent forcément, sous l'action des leviers articulés (21, 21''), les extrémités des éléments de retenue extérieurs (4, 5) portant sur les faces de commande (7, 8).

13. Lunette d'après une ou plusieurs des revendications 1 à 12,
caractérisée en ce que
pour le guidage d'un élément de retenue (5) disposé en face d'un élément de retenue extérieur (4) déplaçable dans une ouverture d'entrée agrandie, la pièce centrale (6) est munie, dans le sens prolongé de la face de commande correspondante (8), d'une face de portée (30) pour le galet (18) collaborant avec celle-ci.

14. Lunette d'après une ou plusieurs des revendications 1 à 12,
caractérisée en ce que
l'élément de retenue (5) en face d'un élément de retenue extérieur (4) pivotant dans l'ouverture agrandie, est lié en entraînement, au moyen d'un autre levier articulé (61) conçu sous forme d'un levier angulaire à deux bras, à la pièce centrale (6) ou à l'élément de retenue central (3) qui est logé en rotation au point de jonction des deux bras (62, 63), dont un bras (62) est lié articulé à l'élément de retenue (5) et dont l'autre bras (63) est réglable moyennant une courbe de commande (65) pratiquée dans la pièce centrale (6) ou dans l'élément de retenue central (3)
